# EUROPEAN PATENT APPLICATION

(11) **EP 3 527 630 A1**
(43) Date of publication of application: **21.08.2019**
(21) Application number: 19158195.8
(22) Date of filing: 20.02.2019
(51) Int. Cl.: C09D 11/023, C09D 11/101, B33Y 10/00, B29C 64/112

(54) **RADIATION-CURABLE INK, INK SET, AND THREE-DIMENSIONAL OBJECT**

(30) Priority: 20.02.2018 JP 2018028095
(71) Applicant: Mimaki Engineering Co., Ltd., Tomi-City, Nagano 389-0512 (JP)
(72) Inventor: Tabayashi, Isao, Tomi-city, Nagano 389-0512 (JP)
(74) Representative: Hinkelmann, Klaus

(57) **Abstract**

Provided is a radiation-curable ink suitable for preparing a conductive biological model that contains water, can retain the water for a long period of time, and has a long period of use and to provide a three-dimensional object that is suitable for the biological model, contains water, and can maintain conductivity for a long period of time.

A radiation-curable ink includes a first liquid phase including a radiation-curable hydrophobic polymerizable compound, and a second liquid phase including at least one compound selected from the group consisting of water, an aqueous polymerizable compound, an aqueous polymer, and an aqueous non-polymerizable compound, wherein the second liquid phase is emulsified and dispersed in the first liquid phase. A three-dimensional object is formed by curing the radiation-curable ink, in which a third liquid phase derived from the second liquid phase and including at least one compound selected from the group consisting of water, an aqueous polymerizable compound, an aqueous polymer, and an aqueous non-polymerizable compound is dispersed as a sea-island structure in the continuous phase of the hydrophobic cured product formed by curing the first liquid phase, and the water content of the third liquid phase is 1% by weight or more.

## Description

### BACKGROUND OF THE INVENTION

### TECHNICAL FIELD

The present invention relates to a radiation-curable ink, an ink set, and a three-dimensional object.

### BACKGROUND ART

In recent years, methods for producing three-dimensional objects such as biological models by a laminate shaping method with inkjet have been developed. In these methods, for example, each of the radiation-curable ink for a model material and the radiation-curable ink for a support material is ejected using an inkjet 3D printer to form ink layers. The ink layers are cured with radiation rays and the cured products are deposited to produce a three-dimensional object.

For example, Patent Literature 1 has disclosed a method for producing a stereolithography product by inkjet stereolithography. In this method, each model material including a curable resin component having a weighted average value of a SP value of 9.0 to 10.3 and support material including a water-soluble monofunctional ethylenic unsaturated monomer, a polyoxypropylene glycol having a specific molecular weight, and/or water, and a photopolymerization initiator is repeatedly ejected and cured to integratedly mold a product. The product is immersed into water and the support material alone is dissolved to give a model made of the model material alone.

Non-Patent Literature 1 has disclosed that an organ sample for medical treatment is produced with the inkjet 3D printer using a combination of a silicone rubber model material and a water-soluble support material.

As such a material for biological models, materials softer than rubber (a soft material) have been developed. For example, a hydrogel prepared by polymerizing an aqueous monomer such as acrylamide has been used as the soft material. This hydrogel is a polymer having a three-dimensional network structure that is swelled by absorbing water.

Patent Literature 2 has disclosed an organ model for practicing operative treatment including a hydrogel containing water in a three-dimensional network structure formed by hybridizing a water-soluble organic polymer and a water-swelling layered clay mineral capable of dispersing in water. The hydrogel contains water and thus an organ model having high conductivity can be obtained. Therefore, surgical simulation using electric knives is possible by using this organ model.

Patent Literature 3 has disclosed a hydrogel material for 3D printer used for preparing artificial blood vessels and organ models. This hydrogel material includes a first polymer, a photopolymerization initiator, a monomer that forms a second polymer by polymerizing using the photopolymerization initiator, and a light-absorbing agent and the first polymer and the second polymer constitute the gel. This hydrogel has transparency and can be swelled in water.
Patent Literature 1: Japanese Unexamined Patent Publication No. 2012-111226
Patent Literature 2: Japanese Unexamined Patent Publication No. 2015-138192
Patent Literature 3: Japanese Unexamined Patent Publication No. 2017-26680

Non-patent Literature 1: "'Gomu-Raiku' janai, 3D-purinta de sirikon gomuno shutsuryokuga kanouni (Not 'rubber-like', 3D printer can output silicone rubber)", MONOist, [online], Jun. 27, 2016, ITmedia Inc., [searched at Nov. 29, 2017], Internet <URL:http://monoist.atmarkit.co.jp/mn/articles/1606/27/news049.htm1>

The stereolithography products described in Patent Literature 1 and Non-patent Literature 1 have low conductivity of the materials and do not generate heat at the time of using electric knives. Therefore, the biological models prepared by these methods are unsuitable for the simulation or practice of surgery using electric knives.

The biological model using the hydrogel as described in Patent Literature 2 has a low water retention capability such as about 3% weight reduction caused by water evaporation when the biological model is allowed to stand for one day under general environment (for example, under environment of an ambient temperature of 25°C and a humidity of 50% RH) and thus is likely to become hard. Therefore, the biological model using the hydrogel in the aspect as described in Patent Literature 2 has a problem of an extremely short period of use.

Similarly, the biological model using the hydrogel as described in Patent Literature 3 may deteriorate flexibility due to water evaporation from the hydrogel when the biological model is allowed to stand.

Therefore, an object of the present invention of this application is to provide a radiation-curable ink suitable for preparing a conductive biological model that contains water, can retain the water for a long period of time, and has a long period of use and to provide a three-dimensional object that is suitable for the biological mode, contains water, and can retain conductivity for a long period of time.

The inventors of the present invention have studied to solve the above problem and have found that the three-dimensional object is produced by forming a formed product of a radiation-curable ink made by emulsifying and dispersing the liquid phase of an aqueous gel precursor in a liquid phase including a radiation-curable hydrophobic polymerizable compound using a three-dimensional inkjet printer and curing the formed product of the radiation-curable ink with radiation rays, so that the three-dimensional object has lower electric resistance than that of a hydrophobic cured product formed by curing the radiation-curable hydrophobic polymerizable compound alone and that water evaporation from the hydrogel can be effectively prevented by covering the hydrogel with the hydrophobic cured product. The inventors of the present invention have further studied based on this finding and have accomplished the present invention.

Namely, in order to solve the problem, a radiation-curable ink according to the first aspect of the present invention includes: a first liquid phase including a radiation-curable hydrophobic polymerizable compound; and a second liquid phase including at least one compound selected from the group consisting of water, an aqueous polymerizable compound, an aqueous polymer, and an aqueous non-polymerizable compound, whereby the second liquid phase is emulsified and dispersed in the first liquid phase.

Curing the radiation-curable ink having the above constitution with radiation rays allows water evaporation to be prevented because a third liquid phase derived from the second liquid phase is dispersed in a hydrophobic cured product formed by curing the liquid phase including the hydrophobic polymerizable compound. Therefore, the cured radiation-curable ink contains water and can retain the water for a long period of time, and is suitable for preparation of the conductive biological model having a long period of use.

The emulsification and dispersion is preferably water-in-oil (W/O) emulsion.

By curing the radiation-curable ink of this constitution with radiation rays, the aqueous gel or the like serving as the third liquid phase derived from the second liquid phase becomes a dispersoid in a particle state or the like. The dispersoid is covered with the continuous phase of the hydrophobic cured product and thus water evaporation from the aqueous gel or the like serving as the third phase can be effectively prevented.

The radiation-curable ink preferably further includes an emulsifying agent that emulsifies the second liquid phase in the first liquid phase.

This constitution facilitates the control of the water-in-oil (W/O) emulsion in the radiation-curable ink and the emulsion state of the water-in-oil (W/O) emulsion becomes stable.

The water content of the radiation-curable ink is preferably 1% by weight or more in the radiation-curable ink.

This constitution provides a biological model that has a higher degree of conductivity, has a large water vaporization amount caused by conduction, and is more suitable for surgical simulation and practice using electric knives.

The radiation-curable ink preferably further includes a coloring agent.

This constitution can provide a biological model that is not a colorless and transparent three-dimensional object but an opaque three-dimensional object mimicking colors of skins and organs and having similar color to the actual skins and organs.

The radiation-curable ink preferably further includes an inorganic pigment capable of forming a gel.

This constitution allows the degree of conductivity and elasticity of the three-dimensional object of the cured product to be controlled.

An ink set according to the second aspect of the present invention includes the radiation-curable ink including the coloring agent and the radiation-curable ink not including the coloring agent.

According to the ink set having the above constitution, a glossy finish of the three-dimensional object provided by a colorless ink can be achieved.

A three-dimensional object according to the third aspect of the present invention is formed by curing the radiation-curable ink, in which a third liquid phase derived from the second liquid phase and including at least one compound selected from the group consisting of water, an aqueous polymerizable compound, an aqueous polymer, and an aqueous non-polymerizable compound is dispersed as a sea-island structure in the continuous phase of the hydrophobic cured product formed by curing the first liquid phase, and the water content of the third liquid phase is 1% by weight or more.

The three-dimensional object having the above constitution has a large water content as compared with the three-dimensional object formed with the hydrophobic cured product alone, has conductivity, and can prevent water evaporation from the third liquid phase by the film of the hydrophobic cured product. Therefore, the three-dimensional object having the above constitution can retain the conductivity for a long period of time and is suitable for the biological model.

According to the present invention, the radiation-curable ink suitable for preparing a conductive biological model that contains water, can retain the water for a long period of time, and has a long period of use can be provided and the three-dimensional object that is suitable for the biological mode, contains water, and can retain conductivity for a long period of time can be provided.

### BRIEF DESCRIPTION OF THE DRAWINGS

FIG. 1 is a conceptual view of a radiation-curable ink according to the embodiment of the present invention.
FIG. 2 is a conceptual view of the three-dimensional object formed by ejecting, curing, and depositing the radiation-curable ink according to the embodiment of the present invention.

### DESCRIPTION OF EMBODIMENTS

Subsequently, the present invention will be described in more detail.

The radiation-curable ink according to the present invention includes a first liquid phase including a radiation-curable hydrophobic polymerizable compound, and a second liquid phase including at least one compound selected from the group consisting of water, an aqueous polymerizable compound, an aqueous polymer, and an aqueous non-polymerizable compound, whereby the second liquid phase is emulsified and dispersed in the first liquid phase. In other words, the radiation-curable ink according to the present invention has two separated liquid phases of the first liquid phase and the second liquid phase and the second phase serving as a dispersoid is dispersed in a particle state in the first liquid phase serving as a dispersion medium.

### (First liquid phase)

The first liquid phase according to the present invention is a liquid phase including the radiation-curable hydrophobic polymerizable compound and includes the liquid phase made of the radiation-curable hydrophobic polymerizable compound alone. The first liquid phase is cured by irradiating the radiation-curable ink according to the present invention with radiation rays to form a hydrophobic cured product. Examples of the first liquid phase may include a phase including the radiation-curable hydrophobic polymerizable compound included in an organic solvent. The radiation-curable hydrophobic polymerizable compound is a polymerizable compound that is hydrophobic and can be solidified from the liquid by polymerizing the polymerizable compound with radiation rays or the like. The solidification includes change into a solid having flexibility and stretchability and gelation/solation.

In the present specification, the radiation rays (energy rays) mean the broad sense of radiation rays including ionizing radiation rays and nonionizing radiation rays. More specifically, the radiation rays are not particularly limited as long as the radiation rays can provide energy that can generate initiation species in the ink by the irradiation with the radiation rays. Examples of the radiation rays extensively include α rays, β rays, γ rays, X rays, electron beams, ultraviolet rays (UV), visible rays, and infrared rays. Of these radiation rays, ultraviolet rays and electron beams are preferable from the viewpoint of sensitivity of curing and easy availability of equipment and ultraviolet rays are particularly preferable.

In the present specification, the term "polymerizable" means all reactivity in which, for example, a low molecular weight compound changes into a macromolecular compound. Examples of the term "polymerizable" include reactivity including radical polymerization, anionic polymerization, cationic polymerization, condensation polymerization, and crosslinking. Of these types of reactivity, the reactivity of radical polymerization, cationic polymerization, or crosslinking is preferable. Examples of the polymerizable compound include monomers, raw materials for condensation polymerization, and in addition, curable resins and semi-cured resins. Specifically examples of the polymerizable compound include compounds having a unsaturated bond that can carrying out addition polymerization of anionic polymerization, cationic polymerization, and radical polymerization in the presence of ions or organic radicals and compounds having a functional group capable of condensation polymerization.

The hydrophobic polymerizable compound according to the present invention is not particularly limited as long as the compound is a polymerizable compound having hydrophobicity and curability. Examples of the polymerizable compound having hydrophobicity and curability include an aromatic group-containing polymerizable compound, a (meth)acrylate having an alkyl group, vinyl chloride, and butadiene. The hydrophobic polymerizable compound preferably provides a flexible cured product formed by curing with radiation rays. Examples of the hydrophobic polymerizable compound include a (hydrophobic) rubber precursor. More specifically, a compound in which a double bond remains after radiation ray curing is preferable.

Examples of a (meth)acrylate having an alkyl group may include methyl (meth)acrylate, ethyl (meth)acrylate, (iso)propyl (meth)acrylate, (iso or tertiary)butyl (meth)acrylate, 2-ethylhexyl (meth)acrylate, (iso)octyl (meth)acrylate, (iso)decyl (meth)acrylate, (iso)dodecyl (meth)acrylate, (iso)stearyl (meth)acrylate, and behenyl (meth)acrylate.

Examples of the aromatic group-containing polymerizable compound include styrene, vinylnaphthalene, α-methylstyrene, vinyltoluene, ethylvinylbenzene, 4-vinylbiphenyl, and 1,1-diphenylethylene. Of these aromatic group-containing polymerizable compounds, styrene, α-methylstyrene, and vinyltoluene are preferable from the viewpoint of storage stability. These hydrophobic polymerizable compounds may be used singly or in combination of two or more of the compounds.

As the first liquid phase, a general radiation-curable ink that can be used for an inkjet shaping method may be used. Specifically, VeroWhitePlus, VeroBlackPlus, VeroBlue, VeroGray, VeroClear, and the like manufactured by Stratasys Ltd., AR-M1 and AR-M2 manufactured by KEYENCE CORPORATION, and LH100 Clear liquid, LH100 Cyan, LH100 Yellow, LH100 Magenta, LH100 White, LH100 Black, LF-140 Cyan, LF-140 Light Cyan, LF-140 Yellow, LF-140 Magenta, LF-140 Light Magenta, LF-140 White, LF-140 Black, and LF-140 white, manufactured by MIMAKI ENGINEERING CO., LTD. may be used.

The proportion of the first liquid phase in the radiation-curable ink is not particularly limited. The proportion is, for example, 1% by weight or more and 99% by weight or less and preferably 10% by weight or more and 90% by weight or less.

### (Second liquid phase)

The second liquid phase according to the present invention is a liquid phase including at least one compound selected from the group consisting of water, an aqueous polymerizable compound, an aqueous polymer, and an aqueous non-polymerizable compound. In the present specification, the term "aqueous" may include the meaning of properties of easily including water such as hydrophilicity and water solubility. The second liquid phase turns into a third liquid phase dispersed in a cured product after the radiation-curable ink according to the present invention is cured to form the cured product such as the three-dimensional object, resulting in providing conductivity. The third liquid phase is a liquid phase derived from the second liquid phase, including at least one compound selected from the group consisting of water, the aqueous polymerizable compound, the aqueous polymer, and the aqueous non-polymerizable compound, and existing in the hydrophobic cured product formed by curing the first liquid phase. The second liquid phase and the third liquid phase are phases at least including a liquid and may be a sol/gel phase.

The aqueous polymerizable compound according to the present invention is a polymerizable compound that has characteristics of hydrophilicity or water solubility, polymerizes by heat, radiation rays, or the like and can solidify from the liquid. The solidification includes change into a solid having flexibility and stretchability and gelation. In the present specification, such solidification may be described as curing.

The aqueous polymer according to the present invention is a polymer that is formed by polymerizing the aqueous polymerizable compound and has the characteristics of hydrophilicity or water solubility.

The aqueous non-polymerizable compound according to the present invention is a compound that has the characteristics of hydrophilicity or water solubility and does not exhibit polymerizability. Examples of the aqueous non-polymerizable compound include polar solvents including alcohols such as methanol and ethanol and ethers.

Examples of the aqueous polymerizable compound include compounds having a polar group and a polymerizable functional group. Examples of the polymerizable functional group include a vinyl group and an epoxy group. Examples of the polar group include an amide group, an amino group, a hydroxy group, a tetramethylammonium group, and a silanol group. More specific examples of the aqueous polymerizable compound include an acryl amide-based compound, vinyl acetate, acrylonitrile, an acrylic ester, and methyl methacrylate. Examples of the acryl amide-based compound include methacrylamide, acrylamide, and N-substituted compounds thereof (for example, N,N-dimethylacrylamide). These aqueous polymerizable compounds may be used singly or in combination of two or more of the compounds. Of these compounds, acrylamide is preferable as the aqueous polymerizable compound.

The proportion of the second liquid phase in the radiation-curable ink according to the present invention is not particularly limited. The proportion is, for example, 0.1% by weight or more and 99.9% by weight or less. The second liquid phase having a higher proportion tends to cause phase transition to form oil-in-water (O/W) emulsion and thus an optimum proportion can be set depending on the types of the first liquid phase and the second liquid phase to be combined.

The water content in the second liquid phase according to the present invention is not particularly limited. The water content is preferably 0.5% by weight or more and more preferably 1% by weight or more in the second liquid phase. The water content in the radiation-curable ink according to the present invention is preferably 0.1% by weight or more, more preferably 0.5% by weight or more, further preferably 1% by weight or more, and particularly preferably 10% by weight or more. The origin of the water in the radiation-curable ink is not particularly limited. This water may be water included in the raw materials of the radiation-curable ink, that is, the aqueous polymerizable compound, the aqueous polymer, aqueous non-polymerizable compound, the hydrophobic polymerizable compound, and the like, water to be added, or water absorbed from atmospheric air during storage of the radiation-curable ink.

In the case where the second liquid phase includes a radiation-curable aqueous polymerizable compound, as described below, irradiation of the radiation-curable ink according to the present invention with radiation rays allows the radiation-curable ink to be polymerized to form an aqueous polymer and the aqueous polymer is included in the third liquid phase. Examples of the aqueous polymer in the third liquid phase include an aqueous gel.

The second liquid phase turns into the third liquid phase by irradiating the radiation-curable ink according to the present invention with radiation rays. The third liquid phase is a liquid phase including at least one compound selected from the group consisting of water, the aqueous polymerizable compound, the aqueous polymer, and the aqueous non-polymerizable compound. In the case where the third liquid phase includes water, the origin of the water is not particularly limited. The water may be water included in the first liquid phase including the radiation-curable hydrophobic polymerizable compound in the radiation-curable ink or the second liquid phase, water absorbed from atmospheric air during storage or use of the radiation-curable ink, or water to be added to the cured product after curing. For water addition, water is preferably added before the curing from the viewpoint of shape forming accuracy of the cured product. The water content in the third liquid phase is not particularly limited. The water content is preferably 0.5% by weight or more, more preferably 1% by weight or more, and further preferably 10% by weight or more.

The ratio of the first liquid phase and the second liquid phase in the radiation-curable ink is not particularly limited. The ratio is 1/99 to 99/1 in terms of First liquid phase/Second liquid phase (weight ratio) and preferably allows the droplets of the second liquid phase to be dispersed in the first liquid phase.

### (Other component; emulsifying agent)

The radiation-curable ink according to the present invention preferably further includes an emulsifying agent. The emulsifying agent is not particularly limited as long as the emulsifying agent stabilizes the emulsion state of the radiation-curable ink according to the present invention and preferably causes the W/O emulsion to be formed at the use temperature (for example, a normal temperature of 20°C ± 15°C) of the radiation-curable ink. Examples of the emulsifying agent that causes the formation of the W/O emulsion include emulsifying agents having a low HLB value of about 4 to about 8.

Examples of the emulsifying agent include ionic surface-active agents (cationic surface-active agents, anionic surface-active agents, and amphoteric surface-active agents) and nonionic surface-active agents. More specific examples include fatty acid esters including monoglycerin fatty acid esters such as glyceryl myristate, glyceryl monostearate, glyceryl monoisostearate, glyceryl monooleate, glyceryl dioleate, and glyceryl distearate; diglycerin fatty acid esters such as diglyceryl monostearate, diglyceryl monooleate, diglyceryl dioleate, diglyceryl monoisostearate, and diglyceryl triisostearate; polyglycerin fatty acid esters such as tetraglyceryl monostearate, tetraglyceryl monooleate, tetraglyceryl tristearate, tetraglyceryl pentastearate, tetraglyceryl pentaoleate, hexaglyceryl monolaurate, hexaglyceryl monomyristate, hexaglyceryl monostearate, hexaglyceryl monooleate, hexaglyceryl tristearate, hexaglyceryl tetrabehenate, hexaglyceryl pentastearate, hexaglyceryl pentaoleate, hexaglyceryl polylinolenates, decaglyceryl monolaurate, decaglyceryl monomyristate, decaglyceryl monostearate, decaglyceryl monoisostearate, decaglyceryl monooleate, decaglyceryl monolinoleate, decaglyceryl distearate, decaglyceryl diisostearate, decaglyceryl tristearate, decaglyceryl trioleate, decaglyceryl pentastearate, decaglyceryl pentahydroxystearate, decaglyceryl pentaisostearate, decaglyceryl pentaoleate, decaglyceryl heptastearate, decaglyceryl heptaoleate, decaglyceryl decastearate, decaglyceryl decaisostearate, decaglyceryl decaoleate, and decaglyceryl polyricinolates; other glycerin fatty acid esters such as glyceryl polyoxyethylene monostearates and glyceryl polyoxyethylene monooleates; sorbitan fatty acid esters such as sorbitan monolaurate, sorbitan monopalmitate, sorbitan monostearate, sorbitan sesquistearate, sorbitan tristearate, sorbitan monoisostearate, sorbitan sesquiisostearate, sorbitan monooleate, sorbitan sesquioleate, sorbitan trioleate, sorbitan polyoxyethylene monopalmitates, sorbitan polyoxyethylene monostearates, sorbitan polyoxyethylene tristearates, sorbitan polyoxyethylene monoisostearates, sorbitan polyoxyethylene monooleates, and sorbitan polyoxyethylene trioleates; polyoxyethylene sorbitan fatty acid esters such as sorbit polyoxyethylene monolaurates, sorbit polyoxyethylene hexastearates, sorbit polyoxyethylene tetrastearates, and sorbit polyoxyethylene tetraoleates; and polyethylene glycol fatty acid esters such as polyethylene glycol monolaurates, polyethylene glycol monostearates, polyethylene glycol monooleates, ethylene glycol distearate, and diethylene glycol distearate, polyothylene glycol distearates, and polyethylene glycol diisostearates; polyoxyethylene alkyl ether such as polyoxyethylene castor oils, polyoxyethylene hydrogenated castor oils, polyoxyethylene phytosterols, polyoxyethylene phytostanols, polyoxyethylene cholestanols, polyoxyethylene lauryl ethers, polyoxyethylene cetyl ethers, polyoxyethylene stearyl ethers, polyoxyethylene polyoxypropylene cetyl ethers, and polyoxyethylene polyoxypropylene decyl tetradecyl ethers; and ethers such as polyoxyethylene styrenated phenyl ethers, polyoxyethylene naphthyl ethers, and polyoxyethylene phenyl ethers. These emulsifying agents may be used singly or in combination.

### (Other components; initiator)

The radiation-curable ink according to the present invention preferably further includes an initiator. The initiator is not particularly limited as long as the initiator can initiate curing of the aqueous polymerizable compound and/or hydrophobic polymerizable compound by irradiating with the radiation rays. The initiator may be hydrophilic, hydrophobic, or amphoteric and may be used singly or in combination. The initiator may be included in the first liquid phase and/or the second liquid phase. The initiator is also introduced into the other phase due to the emulsifying agent or the like to initiate polymerization of the hydrophobic polymerizable compound and/or aqueous polymerizable compound.

Examples of the initiator include 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide, bis-(2,6-dimethoxybenzoyl)-2,4,4-trimethylpentylphosphine oxide, and bis-(2,4,6-trimethylbenzoyl)-phenylphosphine oxide. These initiators may be used singly or in combination.

### (Other component; coloring agent)

The radiation-curable ink according to the present invention preferably further includes a coloring agent. As the coloring agent, various coloring agents of CMYB can be appropriately used. The coloring agent may be included in the hydrophobic polymerizable compound phase and/or the aqueous polymerizable compound phase. Addition of the coloring agent allows the radiation-curable ink according to the present invention to be colored to specific colors such as colors of skins and organs. Use of the ink set including various coloring agents allows the cured product having the colors of skins and organs to be obtained by combing the inks in the ink set. Including the coloring agent in the radiation-curable ink allows not the colorless and transparent three-dimensional object but the biological model mimicking the colors of skins and organs to be obtained.

Examples of the coloring agents in the case of a cyan ink include C. I. Pigment Blue-1, 2, 3, 15:3, 15:4, 15:34, 16, 22, and 60.

Examples of the coloring agents in the case of a magenta ink include C. I. Pigment Red 5, 7, 12, 48 (Ca), 48 (Mn), 57 (Ca), 57:1, 112, 122, 123, 168, 184, 202, and 209 and C. I. Pigment Violet 19.

Examples of the coloring agents in the case of a yellow ink include C. I. Pigment Yellow 1, 2, 3, 12, 13, 14C, 16, 17, 73, 74, 75, 83, 93, 95, 97, 98, 109, 110, 114, 120, 128, 129, 130, 138, 150, 151, 154, 155, 180, and 185.

Examples of the coloring agents in the case of a black ink include HCF, MCF, RCF, LFF, and SCF manufactured by Mitsubishi Chemical Corporation; MONARCH and REGAL manufactured by Cabot Corporation; Color Black, Special Black, and Printex manufactured by Degussa-Huls AG; Toka Black manufactured by Tokai Carbon Co .,Ltd.; and Raven manufactured by Columbia Chemical Corporation.

The amount of the coloring agent to be blended is not particularly limited. For example, the amount is preferably from 1% by mass to 20% by mass and more preferably from 1% by mass to 10% by mass relative to the total amount of the radiation-curable ink.

### (Other component; inorganic pigment capable of forming gel)

The radiation-curable ink according to the present invention preferably further includes an inorganic pigment capable of forming a gel. Examples of the inorganic pigment capable of forming a gel include swellable clay and a layered inorganic additive that have a property of swelling and dispersing in water. Specific examples of the inorganic pigment include water-swellable smectite and mica and more specific examples of the inorganic pigment include water-swellable hectorite, montmorillonite, and saponite and synthetic mica. For example, the layered inorganic additive forms a gel by ionic interaction of the positive charge at the end portion of crystal plates and the negative charge at the center portion of other crystal plates in water. These inorganic pigments capable of forming a gel may be used singly or in combination of two or more of the inorganic pigments. As the inorganic pigments capable of forming a gel, for example, synthetic hectorite (manufactured by Wako Pure Chemical Industries, Ltd.), (LAPONITE XLG, manufactured by BYK-Chemie GmbH), and synthetic smectite (Sumecton, manufactured by KUNIMINE INDUSTRIES CO., LTD.) are commercially available. The content of the inorganic pigment capable of forming a gel is not particularly limited within a range that does not impair the effect of the present invention. The content is, for example, 1% by mass to 40% by mass in the radiation-curable ink.

### (Other component)

The radiation-curable ink according to the present invention may further include other components within a range that does not impair the effect of the present invention. Examples of other components include a sensitizer, a chain transfer agent, a polymerization inhibitor, a crosslinking agent, an antiaging agent, an antioxidant, an antiseptic, a phosphate ester-based or other flame retardant, a wetting and dispersing agent, an antistatic agent, a plasticizer, a surface lubricant, a leveling agent, a softener, an organic filler, and an inorganic filler.

Examples of the sensitizer include amines that do not cause addition reaction with the polymerization components such as trimethylamine, methyldimethanolamine, triethanolamine, p-diethylaminoacetophenone, ethyl p-dimethylaminobenzoate, isoamyl p-dimethylaminobenzoate, N,N-dimethylbenzylamine, and 4,4'-bis(diethylamino)benzophenone.

The chain transfer agent is not particularly limited as long as the chain transfer agent is a compound that can control the molecular weight of a polymer. Blending of the chain transfer agent can prevent the molecular weight of the cured product from being excessively high at the time of radiation ray curing and thus, for example, water solubility of the cured product can be controlled. Examples of the chain transfer agent include a thiol compound such as 2-mercaptobenzothiazole, and γ-mercaptoxypropyltrimethoxysilane, and 2,4-diphenyl-4-methyl-pentene. The content of the chain transfer agent is not particularly limited. For example, the chain transfer agent may be blended in the radiation-curable ink in an amount of preferably 0.1% by mass to 5% by mass, more preferably 0.2% by mass to 4% by mass, and particularly preferably 0.3% by mass to 3% by mass.

Examples of the polymerization inhibitor include hydroquinone, methoquinone, di-tert-buthylhydroquinone, p-methoxyphenol, butylhydroxytoluene, and nitrosamine salts. The content of the polymerization inhibitor is not particularly limited. For example, the polymerization inhibitor may be added in the radiation-curable ink in the range from 0.01% by mass to 2% by mass. The polymerization inhibitor can inhibit polymerization caused by, for example, heat generation by radiation ray curing and can improve storage stability of the radiation-curable ink.

### (Ink set)

The ink set can be made of the radiation-curable inks according to the present invention in which the inks include each of the various coloring agents such as CMYB. In addition, the ink set can be made by using the radiation-curable inks according to the present invention including the coloring agents and the radiation-curable ink according to the present invention not including the coloring agent. Use of such ink set allows the glossy finish using the colorless ink to be achieved.

### (Preparation of radiation-curable ink)

The method for emulsifying and dispersing the radiation-curable ink according to the present invention is not particularly limited. Examples of the method include a physical method for dispersing a mixture liquid including the radiation-curable hydrophobic polymerizable compound, water, the aqueous polymerizable compound, the aqueous polymer and/or aqueous non-polymerizable compound, and, if necessary, other components to be added with a stirrer or an emulsion machine such as a homogenizer and a colloid mill and a physicochemical method for dispersing by a phase inversion emulsification method, a surface-active agent phase emulsification method, and a phase inversion temperature emulsification method.

Subsequently, one embodiment of preparation of the radiation-curable ink according to the present invention will be described.

The radiation-curable ink is prepared by mixing a general radiation-curable ink composition with acrylamide and the emulsifying agent in a constant ratio and stirring these components at high speed. The degree of conductivity and elasticity of the obtained cured product is controlled by adding a small amount of water and the inorganic pigment (layered inorganic additive such as bentonite and hectorite) to the radiation-curable ink, if necessary.

Addition of the coloring agents of CMYK to the radiation-curable inks allows the biological model mimicking the colors of skins and organs to be obtained as the three-dimensional object.

### (Type of dispersion of radiation-curable ink)

The type of the emulsification and dispersion of the radiation-curable ink according to the present invention is not particularly limited and is preferably the W/O type, that is, the type in which the first liquid phase acts as a dispersion medium to form a continuous phase. Formation of the continuous phase of the first liquid phase results in covering the dispersoid of the third liquid phase with the hydrophobic cured product formed by curing the hydrophobic polymerizable compound in the obtained cured product regardless of the amount ratio of the first liquid phase and the second liquid phase and thus water evaporation from the third liquid phase such as an aqueous gel can be effectively prevented. The shape of the dispersoid is not particularly limited. Examples of the shape include a spherical shape, a rod-like shape, a lamellar shape, and a polygonal shape. The size of the dispersoid is not particularly limited. For example, the size is preferably 1 nm to 500 nm in the case where the radiation-curable ink according to the present invention is used as an ink for inkjet. The size is preferably about 10 µm in the case where the radiation-curable ink according to the present invention is used as an ink for a dispenser method (material ejecting and depositing method).

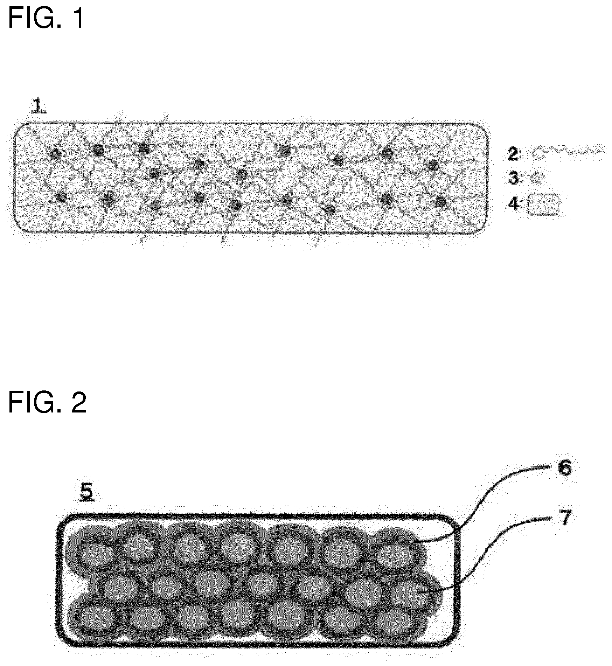

FIG. 1 illustrates one embodiment of the radiation-curable ink according to the present invention. The radiation-curable ink 1 includes the emulsifying agent 2, a gel precursor (water/acrylamide) serving as the second liquid phase 3, and the radiation-curable hydrophobic polymerizable compound and the initiator serving as the first liquid phase 4. In the radiation-curable ink 1, the second liquid phase 3 is stably emulsified and dispersed by the emulsifying agent 2 in the second liquid phase as the water-in-oil (W/O) emulsion.

### (Method for producing the three-dimensional object)

The radiation-curable ink according to the present invention can be extensively used for producing the three-dimensional object. In addition to inkjet 3D printing (a material ejecting and depositing method as an addition production technique method in which a droplet-like material is selectively deposited), the radiation-curable ink according to the present invention can be specifically used in a material ejecting and depositing method, that is, an addition production technique method in which a material is selectively ejected from a nozzle or an opening, a material injecting and depositing method in which a photosensitive resin in a liquid tank is selectively cured by photopolymerization reaction, and a method in which the radiation-curable ink is filled in a mold and cured with radiation rays.

One embodiment of a method for producing the three-dimensional object by using the radiation-curable ink according to the present invention serving as the model material and, if necessary, combining with the support material made of other radiation-curable ink with inkjet 3D priming will be described below.

First, data of the sectional shape obtained by slicing the cured thin films corresponding to a three-dimensional product to be shaped in a depositing direction and data of the sectional shape obtained by slicing the cured thin films of a support material for supporting the model material during shaping in a depositing direction are prepared as the data for three-dimensional shaping based on the three-dimensional CAD data of the three-dimensional object to be shaped. The location data of the support material is prepared so that, in the case where the model material located at the upper side has, for example, an overhang part, the support material is located so as to support the overhang part from the lower side by placing the support material surrounding the model material located at the lower side.

The radiation-curable ink for the model material and/or the radiation-curable ink for the support material is ejected from the inkjet nozzle in a desired pattern based on the sectional data of the model material and the support material to form a thin film layer and the thin film layer is cured by irradiating the thin film layers with radiation rays for curing from a radiation ray source. Subsequently, onto the cured thin film layer, the radiation-curable ink for the model material and/or the radiation-curable ink for the support material is ejected from the inkjet nozzle based on the next sectional shape to form a thin film layer and the thin film layer is cured by irradiating the thin film layer with radiation rays for curing from the radiation ray source. The cured layers corresponding to each of the sectional shapes are deposited to form the target three-dimensional object and the support by repeating the above procedures. Thereafter, the support is removed to give the three-dimensional object.

In the three-dimensional object produced using the radiation-curable ink according to the present invention, the second liquid phase in the radiation-curable ink turns into the third liquid phase and the first liquid phase is cured to form the hydrophobic cured product. Therefore, the three-dimensional object has conductivity. In addition, water evaporation from the third liquid phase can be prevented because at least a part of the surface of the third liquid phase in the three-dimensional object is covered with the hydrophobic cured product. In particular, in the case where the radiation-curable ink is the water-in-oil (W/O) emulsion, for example, the three-dimensional object is obtained as the three-dimensional object 5 having the sea-island structure in which the aqueous gel 7 serving as the third liquid phase is dispersed in the hydrophobic cured product 6 as illustrated in FIG. 2. In FIG. 2, each of the particles of the third liquid phase is covered with the hydrophobic cured product 6. The part of the hydrophobic cured product 6 functions as a supporting structure acting as cell walls of plant to cover the whole aqueous gel 7 with the hydrophobic cured product. Therefore, use of a material that can be dissolved in water serving as the support material results in easily removing the support material alone by immersing the structure body including the model material and the support material and thus the three-dimensional object 5 made of the model material alone can be easily obtained.

The water content in the three-dimensional object is not particularly limited. The content is preferably 0.5% by weight or more, more preferably 1% by weight or more, and further preferably 10% by weight or more in the three-dimensional object.

The three-dimensional object according to the present invention can retain water for a long period of time and thus conductivity is maintained for a long period of time. The three-dimensional object can be provided with flexibility by increasing the ratio of the aqueous cured product and by using hydrophobic cured product phase having flexibility.

Therefore, the three-dimensional object according to the present invention is suitable for preparing the biological model that can be used for surgical simulation and practice using electric knives and can be used for a long period of time. Examples of the application of the biological model include body parts such as a face, a neck, a chest, a body, an arm, and a foot and organs such as a brain, an eyeball, a heart, a lung, an esophagus, a stomach, a large intestine, a small intestine, a liver, a kidney, a pancreas, a spleen, and a bladder.

Various embodiments and modifications are possible without departing from the broader spirit and scope of the present invention. In addition, the above-described embodiments are only for describing the present invention and do not limit the scope of the present invention. Namely, the scope of the present invention is determined not by the embodiments but by the claims. Various modifications that are made within the scope of the claims and within the meaning of the invention equivalent thereto are considered to be within the scope of the present invention.

## Claims

1. A radiation-curable ink comprising:
a first liquid phase comprising a radiation-curable hydrophobic polymerizable compound; and
a second liquid phase comprising at least one compound selected from the group consisting of water, an aqueous polymerizable compound, an aqueous polymer, and an aqueous non-polymerizable compound,
wherein the second liquid phase is emulsified and dispersed in the first liquid phase.

2. The radiation-curable ink according to claim 1, wherein the emulsification and dispersion is water-in-oil (W/O) emulsion.

3. The radiation-curable ink according to claim 1 or 2, further comprising an emulsifying agent that emulsifies the second liquid phase in the first liquid phase.

4. The radiation-curable ink according to any one of claims 1 to 3, wherein the water content of the radiation-curable ink is 1% by weight or more in the radiation-curable ink.

5. The radiation-curable ink according to any one of claims 1 to 4, further comprising a coloring agent.

6. The radiation-curable ink according to any one of claims 1 to 5, further comprising an inorganic pigment capable of forming a gel.

7. An ink set comprising: the radiation-curable ink comprising the coloring agent as claimed in claim 5 and the radiation-curable ink as claimed in any one of claims 1 to 4 not comprising a coloring agent.

8. A three-dimensional object formed by curing the radiation-curable ink as claimed in any one of claims 1 to 6,
wherein a third liquid phase derived from the second liquid phase and comprising at least one compound selected from the group consisting of water, an aqueous polymerizable compound, an aqueous polymer, and an aqueous non-polymerizable compound is dispersed as a sea-island structure in the continuous phase of the hydrophobic cured product formed by curing the first liquid phase, and
the water content of the third liquid phase is 1% by weight or more.
